# EUROPÄISCHE PATENTSCHRIFT

(11) **EP 1 350 562 B1**
(45) Veröffentlichungstag und Bekanntmachung des Hinweises auf die Patenterteilung: **07.05.2008**
(21) Anmeldenummer: 03005348.2
(22) Anmeldetag: 12.03.2003
(51) Int. Cl.: B01J 19/24, B01J 12/00, C01B 3/32, C01B 3/38, C01B 3/58, H01M 8/06

(54) **Vorrichtung zur Kombination zweier heterogen katalysierter Reaktionen und Verfahren zur Herstellung der Vorrichtung**
Apparatus for combining two heterogeneous catalyzed reactions and process of manufacture of the apparatus
Appareillage pour combiner deux réactions catalysées hétérogènement et procédé de fabrication de l'appareillage

(30) Priorität: 28.03.2002 DE 10214293
(43) Veröffentlichungstag der Anmeldung: 08.10.2003
(73) Patentinhaber: NuCellSys GmbH, 73230 Kirchheim/Teck-Nabern (DE)
(72) Erfinder: Portscher, Markus, Dipl.-Ing., 73235 Weilheim (DE); Schüssler, Martin, Dr., 89073 Ulm (DE)
(74) Vertreter: Senft, Stefan Manfred

(56) Entgegenhaltungen:
- EP-A- 0 962 422
- WO-A-01/70626
- DE-C- 19 901 301
- PATENT ABSTRACTS OF JAPAN vol. 1998, no. 12, 31. Oktober 1998 (1998-10-31) & JP 10 182102 A (TOSHIBA CORP), 7. Juli 1998 (1998-07-07)

## Beschreibung

Die Erfindung betrifft eine Vorrichtung zur Kombination zweier heterogen katalysierter Reaktionen sowie ein Verfahren zur Herstellung der Vorrichtung gemäß dem Oberbegriff der unabhängigen Ansprüche.

Aus der DE 199 01 301 C1 ist eine gattungsgemäße Vorrichtung zur Durchführung einer katalytischen endothermen Reaktion und einer damit thermisch gekoppelten katalytischen exothermen Reaktion, insbesondere einer Reformierung oder partiellen Oxidation von Methanol und einer daran anschließenden CO-Oxidation bekannt. Die bekannte Vorrichtung weist eine dünne, poröse und senkrecht durchströmte Katalysatorschicht auf, an deren Oberfläche verteilt Zufuhrkanäle für die Reaktanden der endothermen Reaktion angeordnet sind. Zur Durchführung der exothermen Reaktion mit dem Zwischenproduktgas der endothermen Reaktion wird ein gasförmiges Oxidationsmittel über einen in das Innere der Katalysatorschicht reichenden Zufuhrkanal zugeführt. Das gasförmige Endprodukt wird über einen in der Katalysatorschicht angebrachten Sammelkanal aus der Vorrichtung abgeführt.

Speziell bei senkrecht durchströmten katalysatorhaltigen Schichten für die Reformierung eines Kraftstoffs ist eine thermische Kopplung der exothermen CO-Oxidation mit der endothermen Reformierung schwer zu realisieren. In der gattungsgemäßen Vorrichtung erfordert ein gleichmäßiges Zudosieren von Luft als Oxidationsmittel im Innern der Vorrichtung sowie eine gute Durchmischen des Reformats mit Luft einen hohen Druckabfall über der zu durchströmenden porösen Katalysatorschicht.

Bei der CO-Oxidation in anderen bekannten sogenannten Überström-Vorrichtungen wird das Zwischenproduktgas, das Reformat, mit dem Oxidationsmittel gemischt und reagiert ab, indem das Gemisch eine katalysatorhaltige Schicht überströmt. Weiterhin kann es entlang der Reaktionsstrecke zu einer ungleichmäßigen Reaktion kommen. Im Falle einer thermischen Kopplung eines CO-Oxidationsreaktors an einen Reformierungsreaktor bewirken Temperaturspitzen außerdem eine Schädigung des Reformierungskatalysators und führen zu einer unselektiven CO-Oxidation. Eine externe Zudosierung des Oxidationsmittels bedeutet jedoch einen zusätzlichen apparativen Aufwand.

Bei Teillast reagiert der Sauerstoff schon in der vorderen Zone, im Eintrittsbereich des Reaktors, so dass es im hinteren Bereich zu einer erneuten Bildung von CO kommt. Entlang des Strömungswegs nimmt der Sauerstoffgehalt im Gemisch kontinuierlich ab, so dass es unterhalb eines bestimmten geringen Sauerstoffgehalts zu einer sogenannten "Reverse-Wassergas-Shift"-Reaktion kommen kann, bei der auf Kosten des Endprodukts, in diesem Fall Wasserstoff, wieder CO gebildet wird.

Der Erfindung liegt die Aufgabe zugrunde, eine gattungsgemäße Vorrichtung so zu verbessern, dass eine Rückreaktion von CO weitgehend unterbunden wird, sowie ein Verfahren zum Herstellen der Vorrichtung anzugeben.

Diese Aufgabe wird bei einer Vorrichtung mit den Merkmalen des Anspruchs 1 und bei einem Verfahren nach Anspruch 9 gelöst.

Der Vorteil der erfindungsgemäßen Lösung besteht darin, dass eine weitgehend homogene Sauerstoff/Reformat-Mischung über der Oxidationskatalysatorschicht erreicht werden kann. Weiterhin bildet sich günstigerweise in der Oxidationszone entlang der Katalysatorschicht ein gleichbleibendes CO/O2-Verhältnis aus. Sauerstoff dient als Inhibitor einer "Reverse-Wassergas-Shift"-Reaktion, so dass eine derartige Reaktion zuverlässig unterdrückt werden kann. Der apparative Aufwand dafür ist gering. Bei der Kombination mit senkrecht durchströmten katalysatorhaltigen Schichten zur Reformierung kann die Dosierung des Oxidationsmittels auf niedrigem Druckniveau erfolgen. Bei einer Verwendung einer solchen Vorrichtung etwa in einem Gaserzeugungssystem eines Brennstoffzellensystems, in welchem reformierbare Kraftstoffe als Wasserstofflieferant eingesetzt werden, ist es von besonderem Vorteil, wenn das Oxidationsmittel, insbesondere Luft, auf relativ geringem Druckniveau zudosiert werden kann. Damit wird der apparative Aufwand in der Luftstrecke deutlich vermindert, etwa durch geringere Anforderungen an Verdichter etc.

Günstig ist auch, dass der Druckverlust bei der CO-Oxidation insgesamt gesenkt werden kann, da die Vorrichtung vom Aufbau her einen relativ geringen Druckverlust aufweist.

Weiterhin ist vorteilhaft, dass Temperaturspitzen durch ein lokal ungünstiges CO/O₂-Verhältnis vermieden werden kann, was für die Lebensdauer der Vorrichtung günstig ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren folgendes zeigen:
- Fig. 1: eine schematische Ansicht eines Schnitts durch die erfindungsgemäße Vorrichtung,
- Fig. 2: einen Schnitt durch die Hohlscheibe der Oxidationsmittelzufuhr und
- Fig. 3: (a) eine Draufsicht auf das Innere einer Hohlscheibe gemäß der Erfindung und (b) einen Schnitt durch die Hohlscheibe.

Gemäß der Erfindung wird der CO-Oxidationsbereich mit einem Reformer auf Basis von senkrecht durchströmten katalysatorhaltigen Schichten gekoppelt. Die Wärmeeinbringung bzw. die Sauerstoffeinbringung zur Versorgung der Reformierung erfolgt flächig gleichmäßig.

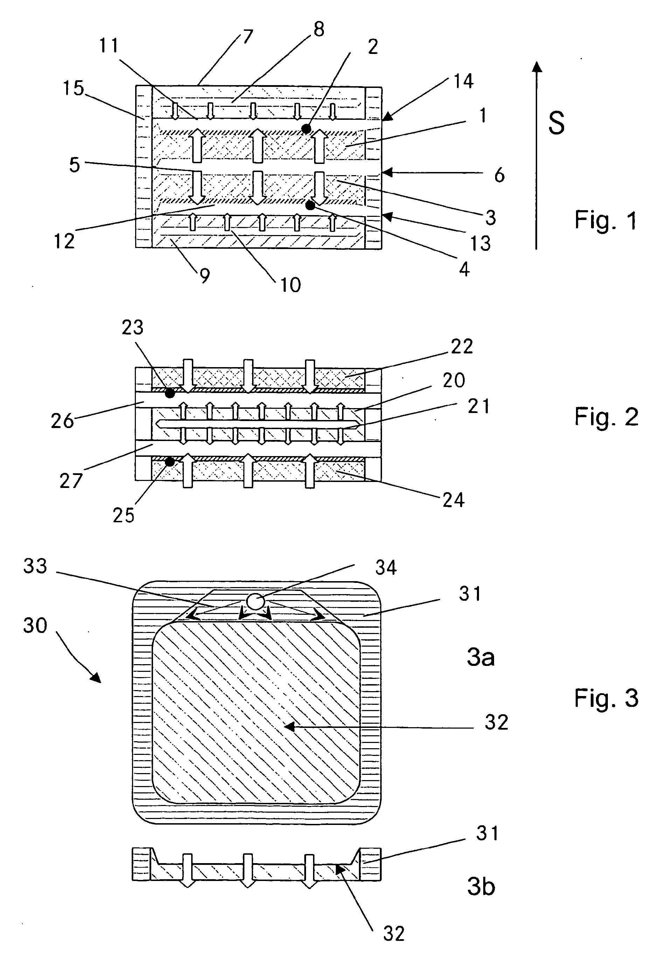

In Fig. 1 ist eine schematische Ansicht eines Schnitts durch die erfindungsgemäße Vorrichtung dargestellt. Dabei ist ein CO-Oxidationsbereich mit einem Reformierungsbereich gekoppelt. Oxidationsmittel wird flächig auf eine senkrecht durchströmte Reformierungskatalysator-Scheibe zudosiert, die mit einem CO-Oxidationskatalysator beaufschlagt ist.

Ein erster poröser, scheibenförmiger Reformerkatalysator 1, welcher als Monolith ausgebildet ist oder einen eingelagerten Reformierungskatalysator aufweisen kann, ist mit einer seiner Flachseiten beabstandet zu einer Flachseite einem zweiten porösen scheibenförmigen Reformerkatalysator 3 angeordnet. Zwischen den beiden Scheiben 1, 3 ist ein Hohlraum 5 ausgebildet, in den durch eine Zufuhröffnung 6 Kraftstoff zugeführt wird. Als Kraftstoff wird bevorzugt ein reformierbarer Kraftstoff eingesetzt, wie etwa Alkohol, Kohlenwasserstoff, Ether und dergleichen, welche bevorzugt zur Wasserstoffgewinnung verwendet werden können. Bevorzugt wird die Vorrichtung zur Wassrstofferzeugung in einem Brennstoffzellensytems eingesetzt.

Vorzugsweise ist die Zufuhröffnung 6 seitlich im Randbereich der Scheiben 1, 3 angeordnet. Auf der dem Hohlraum 5 abgewandten Flachseite ist bei jeder der Scheiben 1, 3 jeweils eine Katalysatorschicht 2 auf der Scheibe 1 bzw. Katalysatorschicht 4 auf der Scheibe 3 angeordnet. Diese Katalysatorschicht 2, 4 bildet jeweils die CO-Oxidationsschicht. Sie ist vorzugsweise dünn im Vergleich mit der Scheibendicke der Reformerkatalysator-Scheiben 1, 3 und besteht vorzugsweise aus einem Edelmetall oder einem edelmetallhaltigen Katalysatormaterial oder einem sonstigen geeigneten Katalysatormaterial zur selektiven Oxidation von CO. Der Flachseite der Scheibe 3 mit der Katalysatorschicht 4 ist gegenüber eine poröse Dosierscheibe 9 und der Flachseite der Scheibe 1 mit der Katalysatorschicht 2 ist gegenüber eine poröse Dosierscheibe 7 angeordnet. Die Dosierscheibe 7, der Reformerkatalysator 1, der Reformerkatalysator 3 und die Dosierscheibe 9 bilden einen Scheibenstapel mit einer Stapelrichtung S, die durch einen Pfeil in der Figur angedeutet ist. Die Scheiben 7, 1, 3, 9 sind mit einem gasdichten Rand 15 nach außen abgedichtet. Es können auch mehr Scheiben zur Reformierung bzw. Dosierung abwechselnd in Stapelrichtung aufeinander folgend vorgesehen sein.

Die Dosierscheiben 7, 9 sind beabstandet zu den jeweiligen Katalysatorschichten 2, 4 bzw. den Reformerkatalysatoren 1, 3 angeordnet. Dabei wird zwischen Scheibe 3 und der Dosierscheibe 9 ein Hohlraum 12 und zwischen der Scheibe 1 und der Dosierscheibe 7 ein Hohlraum 11 gebildet. Diese Hohlräume bilden den Oxidationsraum der Anordnung, in dem CO an den Katalysatorschichten 2 und 4 selektiv und katalytisch oxidiert wird. Die dabei entstehende Wärme unterstützt die endotherme Reformierungsreaktion in den Reformerkatalysator-Scheiben 1, 3 wobei das senkrecht durch die Scheiben 1, 3 strömende Edukt zu einem bevorzugt wasserstoffreichen Reformat umgesetzt wird. Durch Abfuhröffnungen 13 bzw. 14 wird das Produktgas, aus welchen das CO durch die exotherme selektive Oxidation möglichst weitgehend entfernt wurde, aus den Reaktionsräumen 12 bzw. 11 abgeführt.

Die Dosierscheiben 7 bzw. 9 sind im Innern mit Hohlräumen 8 bzw. 10 versehen. In diese Hohlräume 8, 10 wird ein Oxidationsmittel durch nicht dargestellte Zufuhröffnungen zugeführt. Vorzugsweise ist das Oxidationsmittel Luft oder ein sauerstoffreiches Gas. Über die Durchlässigkeit, vorzugsweise die Porosität der Dosierscheiben 7, 9 lässt sich ein geeigneter Druckabfall einstellen, so dass das Oxidationsmittel sich flächig homogen verteilt aus den porösen Dosierscheiben 7, 9 in die Oxidationsräume 11, 12 austreten kann. Zweckmäßigerweise ist die Flachseite der Dosierscheiben 7, 9, welche von den Oxidationsräumen 11, 12 abgewandt sind, nach außen abgedichtet. Falls in Stapelrichtung weitere Reformerkatalysator-Scheiben folgen, entfällt die Abdichtung zweckmäßigerweise, und Oxidationsmittel verlässt die Dosierscheiben 7, 9 auf beiden Flachseiten.

Das Edukt bzw. der Kraftstoff wird in den Hohlraum 5 zwischen den Scheiben 1 und 3 geleitet. Der Druck wird so eingestellt, dass das Edukt möglichst homogen über die Fläche der Scheiben 1, 3 verteilt durch diese hindurchtritt und dabei reformiert wird. Das dabei gebildete Reformat tritt durch die Katalysatorschicht 4 bzw. 2 in die Hohlräume 12 bzw. 11. Über die Durchlässigkeit, vorzugsweise die Porosität der Scheiben lässt sich der geeignete Druckabfall einstellen, so dass das Reformat vorzugsweise flächig homogen verteilt aus den porösen Scheiben 1, 3 austreten kann.

Die Strömung des Reformats in der Reformierungskatalysator-Scheibe 1 und die Strömung des Oxidationsmittels in der Dosierscheibe 7 ist bezogen auf den gemeinsamen Oxidationsraum 11 entgegengesetzt. Entsprechend sind die Verhältnisse in der Reformierungskatalysator-Scheibe 3 und der Dosierscheibe 9.

Im Falle der senkrecht durchströmten Reformierungskatalysator-Scheiben 1, 3 erhält man aufgrund der relativ niedrigen Strömungsgeschwindigkeiten sowohl der Reformierungsprodukte als auch des eindosierten Oxidationsmittels eine gute Durchmischung in den Oxidationsräumen 11, 12. Weiterhin bildet sich ein gleichmäßiges Verhältnis der lokalen CO/Sauerstoff-Konzentration über die ganze Reaktorfläche, bzw. über die ganze Katalysatorschicht 2, 4. Somit wird in allen Lastfällen Sauerstoff gleichmäßig auf die CO-Oxidationszone verteilt, was für ein ausgeglichenes Temperaturprofil des Reaktionsbereichs sorgt und zu einem guten Umsatz beiträgt. Unter Lastfall wird dabei verstanden, dass zeitabhängig unterschiedliche Mengen Kraftstoff zugeführt werden, um einen zeitlich wechselnden Bedarf an Reformat, vorzugsweise Wasserstoff, bereit zu stellen, z.B. bei einer bevorzugten Verwendung der Vorrichtung in einem Brennstoffzellensystem mit Gaserzeugungssystem.

In Fig. 2 ist eine Dosierscheibe 20 mit einem inneren Hohlraum 21 dargestellt, an die sich beidseits jeweils eine Reformierungskatalysator-Scheibe 22 und 24 anschließt. Der Dosierscheibe gegenüberliegen ist auf der einen Seite die Katalysatorschicht 23 der Reformierungskatalysator-Scheibe 22 und auf der anderen Flachseite die Katalysatorschicht 25 der Reformierungskatalysator-Scheibe 24. Zwischen Reformierungskatalysator-Scheibe 22 bzw. 24 und der Dosierscheibe 20 sind Hohlräume 26 bzw. 27 ausgebildet, in denen die CO-Oxidation stattfindet. Zufuhr- und Abfuhröffnungen sowie Randabdichtungen und dergl. sind nicht dargestellt.

In Fig. 3 ist eine Draufsicht auf eine aufgeschnittene Dosierscheibe 30 dargestellt. Sie besteht aus einem erhabenen Rand 31 mit einer inneren flächigen Vertiefung 32, die im wesentlichen in Lage und Form der jeweiligen Katalysatorschicht entspricht, die später in der Stapelanordnung der Dosierscheibe gegenüberliegt. Der Rand ist zweckmäßigerweise gasdicht ausgeführt. Zusammengesetzt bilden sich zwei solche Halbscheiben 30 eine Dosierscheibe mit innerem Hohlraum. Durch die Zufuhröffnung 34 wird das Oxidationsmittel zugeführt, dieses füllt den Hohlraum mit Oxidationsmittel und verlässt die Dosierscheibe 30 durch die Poren der Scheibe im Bereich der Vertiefung 32. Zweckmäßigerweise befindet sich die Zufuhröffnung 34 in einer Vertiefung 33 im Rand 31 der Scheibe 30, so dass das Oxidationsmittel möglichst gut einströmen kann. Dies ist in der Figur durch kleine schwarze Pfeile angedeutet.

Die poröse Struktur der Dosierscheibe 30 kann durch einen geeigneten Herstellprozess einfach beeinflusst werden so dass für den jeweiligen Einsatzzweck günstige Verhältnisse geschaffen werden können. Die poröse Struktur wird so eingestellt, dass ein hinreichend großer Druckverlust erwirkt werden kann. Der genaue Wert hängt vom jeweiligen System ab, welches vor und hinter der Vorrichtung strömungstechnisch angeschlossen ist. Für ein bevorzugtes Brennstoffzellensystem liegt ein geeigneter Druckverlust im Bereich von 1-1000 mbar, bevorzugt zwischen 10 und 100 mbar. Dies ermöglicht ein flächig gleichmäßiges Austreten des in die hohle Dosierscheibe 30 eindosierten Oxidationsmittels.

Die Herstellung der Dosierscheiben 30 kann über verschiedene Verfahren erfolgen.
Es können zuerst zwei Grünlinge hergestellt werden, die durch Verpressen von Pulver entstanden sind. Diese werden dann mittels Presssintern und/oder Löten gefügt. Der gasdichte Rahmen 31 der beiden Halbscheiben 30 kann aus Vollmaterial oder aus einem sinterfähigen Material bestehen, wie es bereits im Stand der Technik vorgeschlagen wurde. Vorzugsweise wird erst ein gasdichter Rahmen hergestellt, der aus einem Sintermaterial oder einem massivem Material gebildet sein kann.

Die offenporöse Zone 32 besteht ebenfalls aus sinterfähigem Material, dessen Verdichtung beim Pressvorgang so gewählt wird, dass das eindosierte Oxidationsmittel einen ausreichenden Druckverlust für die flächige Gleichverteilung beim durchströmen der Schicht erfährt. Alternativ kann für die offenporöse Struktur auch eine poröse Membran oder Folie vor dem Pressvorgang in den Rahmen 31 eingelegt werden, die beim anschließenden Sintern mit dem gasdichten Rahmen 31 versintert und mit ihm fest verbunden wird. Die geringere Höhe der Zone 32 gegenüber dem gasdichten Rand 31 kann im Pressstempel günstig eingestellt werden, so dass nach dem Zusammenfügen von einer ersten und einer zweiten derartigen Halbscheibe 30 insgesamt eine einzige Hohlscheibe entsteht. Die Vertiefung 33 im Bereich der Zufuhröffnung 34 sowie die Öffnung 34 selbst kann bei der Herstellung des gasdichten Rahmens 31 vorgesehen werden oder auch beim Pressen oder Sintern der Vorrichtung.

Eine andere Variante der Dosierscheibenherstellung besteht aus einem Mehrschichtaufbau. Innerhalb des gasdichten Rahmens 31 werden drei aufeinander folgenden Schichten eingelegt. Dabei wird zwischen porösen Außenschichten eine Folie eingepresst. Die Folie dient als Opferschicht und hat die Eigenschaft, beim anschließenden Sintern zu verdampfen oder aufzulegieren. Dazu kann ein Polymer oder ein niedrigschmelzendes Metall verwendet werden. Sie gehen beim Sintern z.B. in die flüssige Phase über und legieren mit den porösen Außenschichten, so dass sich dabei der Hohlraum der Dosierscheibe bildet.

Um die Zufuhröffnung 34 in den gasdichten Rand einzuarbeiten, kann dieser vor den Füllen z.B. aus zwei Teilen gebildet werden, wobei die Vertiefung 33 und die Zufuhröffnung vorgesehen werden. Dies ist besonders bei einem Rahmen 31 aus Massivmaterial günstig.

Es kann jedoch auch ein erster gasdichter Rand, vorzugsweise aus Sintermaterial, in den Pressstempel eingelegt werden, mit Pulver gefüllt werden und dann die Folie aufgelegt werden. Diese ragt im Bereich der späteren Aussparung 33 in den gasdichten Rahmen 31 hinein. Dann wird ein zweiter gasdichter Rahmen 31 aufgelegt und dieser wieder mit Pulver gefüllt. Anschließend wird der gerahmte Schichtaufbau verpresst und gesintert, wobei sich durch Auflösen der Opferschicht die Hohlscheibe bildet. Damit kann die Dosierscheibe in wenigen und gut kontrollierbaren Prozessschritten hergestellt werden.

## Patentansprüche

1. Vorrichtung zur Durchführung einer katalytischen endothermen Reaktion und einer damit thermisch gekoppelten katalytischen exothermen Reaktion mit einer dünnen, porösen und senkrecht durchströmten Reformierungskatalysator-Scheibe (1, 3, 22, 24), die mit einer Oxidationskatalysatorschicht (2, 4, 23, 25) verbunden ist, mit Zufuhröffnungen (6) für Kraftstoff und Oxidationsmittel (34), sowie Abfuhröffnungen (13, 14) für ein Produktgas,
**dadurch gekennzeichnet, dass** einer ersten Flachseite der Oxidationskatalysatorschicht (2, 4, 23, 25) eine erste Flachseite einer porösen Dosierscheibe (7, 9, 20) gegenüberstehend angeordnet ist, wobei aus der Oxidationskatalysatorschicht (2, 4, 23, 25) flächig im wesentlichen homogen verteilt Reformat und aus der Flachseite der Dosierscheibe (7, 9, 20) flächig im wesentlichen homogen verteilt das Oxidationsmittel austritt.

2. Vorrichtung nach Anspruch 1,
**dadurch gekennzeichnet, dass** ein CO-Oxidationsbereich (2, 4, 23, 24) thermisch mit einem Reformierungsbereich (1, 3, 22, 24) gekoppelt ist, wobei eine flächige Oxidationsmittel-Dosierung auf die senkrecht von einem Edukt durchströmte Reformierungskatalysator-Scheibe (1, 3, 22, 24) erfolgt.

3. Vorrichtung nach Anspruch 1,
**dadurch gekennzeichnet, dass** die Reformierungskatalysator-Scheibe (1, 3, 22, 24) auf einer Flachseite mit der Oxidationskatalysatorschicht (2, 4, 23, 25) belegt ist.

4. Vorrichtung nach Anspruch 1,
**dadurch gekennzeichnet, dass** die Dosierscheibe (7, 9, 20) hohl ausgeführt ist.

5. Vorrichtung nach Anspruch 1,
**dadurch gekennzeichnet, dass** die Dosierscheibe (7, 9, 20) einen gasdichten Rand (31) aufweist und an ihrer Flachseite porös ausgebildet ist.

6. Vorrichtung nach Anspruch 1,
**dadurch gekennzeichnet, dass** die der Oxidationskatalysatorschicht (2, 4, 23, 25) zugewandte Seite der Dosierscheibe (7, 9, 20) im wesentlichen senkrecht vom Oxidationsmittel durchströmt ist.

7. Vorrichtung nach Anspruch 1,
**dadurch gekennzeichnet, dass** zwei Reformierungskatalysator-Scheiben (1, 3) beabstandet voneinander angeordnet sind und einen Hohlraum (6) bilden, durch den Kraftstoff in die Reformierungskatalysator-Scheiben (1, 3) geleitet ist und der Scheibenstapel in Stapelrichtung (S) beidseits von je einer Dosierscheibe (7, 9) umgeben ist.

8. Vorrichtung nach Anspruch 1,
**dadurch gekennzeichnet, dass** eine Dosierscheibe (7, 9) zwischen zwei Reformierungskatalysator-Scheiben (22, 24) angeordnet ist, dergestalt, dass die Oxidationskatalysatorschicht (23, 25) jeweils der Dosierscheibe (7, 9) zugewandt ist.

9. Verfahren zur Herstellung einer Vorrichtung nach Anspruch 1,
**dadurch gekennzeichnet, dass** eine erste Scheibe (30) mit einem gasdichten Rahmen (31) mit einem porösen Innenteil (32) hergestellt wird, wobei im Querschnitt die Höhe des Rahmens (31) größer ist als die Höhe des Innenteils (32), und anschließend eine komplementäre zweite Scheibe (30) mit der ersten Scheibe zusammengefügt wird, wobei eine Hohlscheibe mit gasdichtem Rand gebildet wird, oder dass ein gasdichter Rahmen (31) mit Pulver befüllt wird, eine Folie auf das Pulver gelegt wird, weiteres Pulver auf die Folie aufgebracht wird und anschließend Rahmen (31), Pulver und Folie verpresst und gesintert werden, wobei sich eine Hohlscheibe mit gasdichtem Rahmen (31) bildet.

10. Verfahren nach Anspruch 9,
**dadurch gekennzeichnet, dass** das Pulver so hoch in den gasdichten Rahmen gefüllt wird, dass die Folie im Bereich der Zufuhröffnung (34) auf dem gasdichten Rahmen (31) aufliegt, dass ein zweiter gasdichter Rahmen (31) auf den ersten gasdichten Rahmen aufgelegt wird und anschließend weiteres Pulver auf die Folie geschichtet wird, bis der zweite gasdichte Rahmen (31) im wesentlichen gefüllt ist und die Folie nach dem Sintern im Bereich der Zufuhröffnung im ersten und/oder zweiten Rahmen (31) eine flächige Vertiefung (33) hinterläßt.

11. Verfahren nach Anspruch 9,
**dadurch gekennzeichnet, dass** der gasdichte Rahmen (31) aus massivem Material besteht, in dem die Zufuhröffnung (34) und/oder die flächige Vertiefung im Bereich der Zufuhröffnung (33) vor dem Befüllen mit Pulver und Folie ausgebildet wird.

12. Verwendung der Vorrichtung nach Anspruch 1 in einem Brennstoffzellensystem zur Wasserstofferzeugung.

## Claims

1. Apparatus for carrying out a catalytic endothermic reaction and a catalytic exothermic reaction, thermally coupled to it, with a thin, porous reformation catalytic converter disc (1, 3, 22, 24) through which flow passes at right angles and which is connected to an oxidation catalytic converter layer (2, 4, 23, 25) having inlet openings (6) for fuel and oxidant (34), as well as outlet openings (13, 14) for a product gas,
**characterized in that** a first flat face of a porous metering disc (7, 9, 20) is arranged opposite a first flat face of the oxidation catalytic converter layer (2, 4, 23, 25) with reformer emerging with an essentially homogeneous distribution over an area out of the oxidation catalytic converter layer (2, 4, 23, 25), and with the oxidant emerging essentially homogeneously distributed over an area out of the flat face of the metering disc (7, 9, 20).

2. Apparatus according to Claim 1,
**characterized in that** a CO oxidation area (2, 4, 23, 24) is thermally coupled to a reformation area (1, 3, 22, 24), with oxidant being metered over an area to the reformation catalytic converter disc (1, 3, 22, 24) through which a product passes at right angles.

3. Apparatus according to Claim 1,
**characterized in that** the reformation catalytic converter disc (1, 3, 22, 24) has the oxidation catalytic converter layer (2, 4, 23, 25) on one flat face.

4. Apparatus according to Claim 1,
**characterized in that** the metering disc (7, 9, 20) is hollow.

5. Apparatus according to Claim 1,
**characterized in that** the metering disc (7, 9, 20) has a gas-tight rim (31) and its flat face is porous.

6. Apparatus according to Claim 1,
**characterized in that** oxidant flows essentially at right angles through that face of the metering disc (7, 9, 20) which faces the oxidation catalytic converter layer (2, 4, 23, 25).

7. Apparatus according to Claim 1,
**characterized in that** two reformation catalytic converter discs (1, 3) are arranged at a distance from one another and form a cavity (6) through which fuel is passed into the reformation catalytic converter discs (1, 3), and the disc stack is surrounded by a respective metering disc (7, 9) on both sides in the stacking direction (S).

8. Apparatus according to Claim 1,
**characterized in that** a metering disc (7, 9) is arranged between two reformation catalytic converter discs (22, 24) such that the oxidation catalytic converter layer (23, 25) faces the respective metering disc (7, 9).

9. Method for production of an apparatus according to Claim 1,
**characterized in that** a first disc (30) is produced with a gas-tight frame (31) with a porous inner part (32), with the height of the frame (31) in cross section being greater than the height of the inner part (32), and a complementary second disc (30) is then joined to the first disc, forming a hollow disc with a gas-tight rim, or **in that** a gas-tight frame (31) is filled with powder, a film is placed on the powder, further powder is applied to the film, and the frame (31), the powder and the film are then compressed and sintered, forming a hollow disc with a gas-tight frame (31).

10. Method according to Claim 9,
**characterized in that** the gas-tight frame is filled with the powder to such a height that the film rests on the gas-tight frame (31) in the area of the inlet opening (34), **in that** a second gas-tight frame (31) is placed on the first gas-tight frame and the film is then coated with further powder until the second gas-tight frame (31) is essentially filled, and, after sintering in the area of the inlet opening, the film leaves a flat depression (33) in the first and/or second frame (31).

11. Method according to Claim 9,
**characterized in that** the gas-tight frame (31) is composed of solid material in which the inlet opening (34) and/or the flat depression are/is formed in the area of the inlet opening (33) before being filled with powder and film.

12. Use of the apparatus according to Claim 1 in a fuel cell system for hydrogen production.

## Revendications

1. Dispositif pour effectuer une réaction catalytique endothermique et une réaction catalytique exothermique couplée thermiquement à celle-ci, avec un disque de catalyseur de reformation mince, poreux et à écoulement transversal (1, 3, 22, 24) qui est connecté à une couche de catalyseur d'oxydation (2, 4, 23, 25), avec des ouvertures d'alimentation (6) pour du carburant et des moyens d'oxydation (34), ainsi que des ouvertures d'évacuation (13, 14) pour un gaz produit,
**caractérisé en ce qu'**un premier côté plat d'un disque de dosage poreux (7, 9, 20) est disposé en regard d'un premier côté plat de la couche de catalyseur d'oxydation (2, 4, 23, 25), du reformat réparti de manière essentiellement homogène sortant à plat hors de la couche de catalyseur d'oxydation (2, 4, 23, 25), et le milieu d'oxydation réparti essentiellement de manière homogène sortant à plat hors du côté plat du disque de dosage (7, 9, 20).

2. Dispositif selon la revendication 1,
**caractérisé en ce qu'**une région d'oxydation de CO (2, 4, 23, 24) est couplée thermiquement à une région de reformation (1, 3, 22, 24), un dosage du milieu d'oxydation plat étant réalisé sur le disque de catalyseur de reformation (1, 3, 22, 24) traversé perpendiculairement par un produit de départ.

3. Dispositif selon la revendication 1,
**caractérisé en ce que** le disque de catalyseur de reformation (1, 3, 22, 24) est revêtu sur un côté plat d'une couche de catalyseur d'oxydation (2, 4, 23, 25).

4. Dispositif selon la revendication 1,
**caractérisé en ce que** le disque de dosage (7, 9, 20) est creux.

5. Dispositif selon la revendication 1,
**caractérisé en ce que** le disque de dosage (7, 9, 20) présente un bord étanche aux gaz (31) et est poreux au niveau de son côté plat.

6. Dispositif selon la revendication 1,
**caractérisé en ce que** le côté du disque de dosage (7, 9, 20) tourné vers la couche de catalyseur d'oxydation (2, 4, 23, 25) est traversé essentiellement perpendiculairement par le milieu d'oxydation.

7. Dispositif selon la revendication 1,
**caractérisé en ce que** deux disques de catalyseur de reformation (1, 3) sont disposés à distance l'un de l'autre et forment un espace creux (6) à travers lequel du carburant est guidé dans les disques de catalyseur de reformation (1, 3), l'empilement de disques étant entouré dans la direction de l'empilement (S) de part et d'autre par un disque de dosage respectif (7, 9).

8. Dispositif selon la revendication 1,
**caractérisé en ce qu'**un disque de dosage (7, 9) est disposé entre deux disques de catalyseur de reformation (22, 24), de telle sorte que la couche de catalyseur d'oxydation (23, 25) soit tournée à chaque fois vers le disque de dosage (7, 9).

9. Procédé de fabrication d'un dispositif selon la revendication 1,
**caractérisé en ce qu'**un premier disque (30) est fabriqué avec un cadre étanche aux gaz (31) avec une partie interne poreuse (32), la hauteur du cadre (31) en section transversale étant supérieure à la hauteur de la partie interne (32) et ensuite un deuxième disque complémentaire (30) étant assemblé au premier disque, un disque creux étant formé avec un bord étanche aux gaz, ou bien en ce qu'un cadre (31) étanche aux gaz est rempli de poudre, une feuille est placée par-dessus la poudre, de la poudre supplémentaire est versée sur la feuille et ensuite le cadre (31), la poudre et la feuille sont pressés et frittés, un disque creux avec un cadre (31) étanche aux gaz étant ainsi formé.

10. Procédé selon la revendication 9,
**caractérisé en ce que** la poudre est versée dans le cadre étanche aux gaz jusqu'à un niveau tel que la feuille s'applique dans la région de l'ouverture d'alimentation (34) contre le cadre étanche au gaz, **en ce qu'**un deuxième cadre (31) étanche aux gaz est posé sur le premier cadre étanche aux gaz et **en ce qu'**ensuite de la poudre supplémentaire est versée en couche sur la feuille, jusqu'à ce que le deuxième cadre (31) étanche aux gaz soit sensiblement rempli et que la feuille laisse, après le frittage, un renfoncement plat (33) dans la région de l'ouverture d'alimentation dans le premier et/ou le deuxième cadre (31).

11. Procédé selon la revendication 9,
**caractérisé en ce que** le cadre (31) étanche aux gaz est en matériau massif, dans lequel l'ouverture d'alimentation (34) et/ou le renfoncement plat sont réalisés dans la région de l'ouverture d'alimentation (33) avant le remplissage avec de la poudre et avec la feuille.

12. Utilisation du dispositif selon la revendication 1, dans un système de piles à combustible pour la production d'hydrogène.
